# EUROPEAN PATENT SPECIFICATION

(11) **EP 2 625 414 B1**
(45) Date of publication and mention of the grant of the patent: **17.12.2014**
(21) Application number: 10755003.0
(22) Date of filing: 20.08.2010
(51) Int. Cl.: F02M 19/08, F02M 35/02, F02B 25/22

(54) **AIR SUPPLY APPARATUS FOR TWO-STROKE COMBUSTION ENGINE**
LUFTZUFÜHRUNGSVORRICHTUNG FÜR EINEN ZWEITAKTVERBRENNUNGSMOTOR
APPAREIL D'APPORT D'AIR POUR MOTEUR À COMBUSTION À DEUX TEMPS

(43) Date of publication of application: 14.08.2013
(73) Proprietor: Husqvarna Zenoah Co., Ltd., Kawagoe-shi Saitama 350-1165 (JP)
(72) Inventor: OHNIWA, Takashi, Kawagoe-shi Saitama 350-1165 (JP); SEKINE, Akiyoshi, Kawagoe-shi Saitama 350-1165 (JP)
(74) Representative: Bergquist, Kjell Gunnar
(86) International application number: PCT/JP2010/005157
(87) International publication number: WO 2012/023163

(56) References cited:
- WO-A2-2006/056789
- DE-A1- 10 341 230
- DE-A1-102004 009 310
- DE-A1-102005 003 559
- DE-A1-102006 024 078
- US-A1- 2005 073 062
- US-A1- 2007 257 379

## Description

### Technical Field

The present invention relates to an air supply apparatus for a two-stroke combustion engine. In particular, the present invention relates to an air cleaner of the air supply apparatus.

### Background Art

Two-stroke stratified scavenging combustion engines are well known in the art. In such engines, a complete cycle of the engine may include an upward stroke and a downward stroke of a piston. During an upward stroke, intake of fresh air-fuel may take place whereas, during a subsequent downward stroke after ignition, scavenging may occur. Scavenging air is utilized during scavenging to create a stratified layer between burned gases and unburned air-fuel mixture to minimize exhaust of unburned air-fuel mixture with burned gases.

Typically, special carburetors are utilized for providing the engine with scavenging air. Such carburetors have a separate mixture passage and a scavenging air passage (for example, U.S. Patent Publication No. 2005/0073062. This document discloses a carburetor with an intake channel partitioned into an air channel and a mixture channel by a partition wall. Another example is shown in document DE 103 41 230 A1.

An ordinary carburetor may be used with a two-stroke stratified scavenging combustion engine. Typically, an ordinary carburetor has a throttle valve and a choke valve within the single passage. Further, an ordinary carburetor may also be utilized with a variety of internal combustion engines, such as, but not limited to, two-stroke combustion engines, four-stroke combustion engines, or the like.

### Summary of Invention

### Technical Problem

Such special carburetors involve a complicated construction and are more expensive than ordinary carburetors which only have a single passage. Further, in some cases, an air control valve may be provided in the scavenging air passage in addition to a throttle valve in the mixture passage. Moreover, the air control valve may require special control mechanism to synchronize its actuation with that of the throttle valve. This may further increase the cost of such carburetors.

When such an ordinary carburetor is used with a two-stroke startified scavenging combustion engine, a portion of air-fuel mixture may flow into the air channel. Consequently, scavenging air may contain some unburned air-fuel mixture which flows out with the burned gases. This may result in poor emission standards of the engine.

In light of the foregoing, there is a need for a compact, simple and cost effective air supply apparatus, for a two-stroke stratified scavenging combustion engine, which can improve emission quality of the engine.

In view of the above, it is an objective of the present invention to solve or at least reduce the problems discussed above. In particular, the objective is to provide an improved air supply apparatus for a two-stroke stratified scavenging combustion engine that can improve emission quality of the engine. Moreover, the air supply apparatus may have a simple, compact and cost effective construction.

### Solution to Problem

The objective is at least partly achieved according to the novel air supply apparatus for a two-stroke stratified scavenging combustion engine according to the invention.

The air supply apparatus includes: an air cleaner having an air outlet and a partition that divides the air outlet into a first aperture and a second aperture; and
a carburetor comprising a passage and at least a throttle valve provided in the passage, the throttle valve substantially dividing the passage into an air portion and a mixture portion, in which
the first aperture is provided at a position corresponding to the air portion and the second aperture is provided at a position corresponding to the mixture portion, and
an opening area of the first aperture differs from an opening area of the second aperture.

Such a configuration of the air cleaner may eliminate an additional cost of a special carburetor with separate passages for scavenging air and air-fuel mixture, and result in a more compact arrangement of the air supply apparatus. Further, by optimizing the areas of the first aperture and the second aperture, a pressure difference and a flow velocity difference are created between the air portion and the mixture portion of the passage. This substantially minimizes a flow of air-fuel mixture mixed from the mixture portion to the air portion during operation of the engine. Consequently, scavenging air may contain a minimum amount of air-fuel mixture. Thus, during a downward stroke of the piston, an amount of unburned air-fuel mixture present in burned gases may be substantially reduced, leading to improved emission standards of the engine.

In the air supply apparatus according to the invention, the opening area of the first aperture may preferably be larger than that of the second aperture.

In the air supply apparatus according to the invention, the opening area of the first aperture may preferably be smaller than that of the second aperture.

In the air supply apparatus according to the invention, a cylindrical member covering the air outlet is preferably provided inside the air cleaner, an inside of the cylindrical member is preferably partitioned by the partition into a first section and a second section and the first aperture and the second aperture are provided on an outer circumference of the cylindrical member, the first aperture corresponding to the first section and the second aperture corresponding to the second section.

In the air supply device according to the invention, the partition is preferably plate-shaped.

In the air supply apparatus according to the invention, a choke valve provided by a butterfly valve is preferably provided in the passage, and the partition preferably receives the choke valve in a fully open state.

In the air supply apparatus according to the invention, the partition is preferably substantially L-shaped with a horizontal portion and a vertical portion, and the horizontal portion of the partition divides the air outlet into the first aperture and the second aperture.

### Brief Description of Drawings

The invention will in the following be described in more detail with reference to the enclosed drawings, wherein:
[fig.1]FIG. 1 illustrates a sectional view of a two-stroke stratified scavenging combustion engine with an air supply apparatus, according to an embodiment of the present invention;
[fig.2A]FIG. 2A illustrates a front exploded view of an air cleaner, according to an embodiment of the present invention;
[fig.2B]FIG. 2B illustrates a rear exploded view of the air cleaner, according to an embodiment of the present invention;
[fig.3A]FIG. 3A illustrates a front perspective view of a main body of the air cleaner, according to an embodiment of the present invention;
[fig.3B]FIG. 3B illustrates a front view of the main body, according to an embodiment of the present invention;
[fig.3C]FIG. 3C illustrates a rear view of main body, according to an embodiment of the present invention;
[fig.4A]FIG. 4A illustrates a front perspective view of a body of the air cleaner, according to another embodiment of the present invention;
[fig.4B]FIG. 4B illustrates a front view of the body, according to another embodiment of the present invention; and
[fig.4C]FIG. 4C illustrates a rear view of body, according to another embodiment of the present invention.

### Description of Embodiments

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of devices. In the drawings, like numbers refer to like elements.

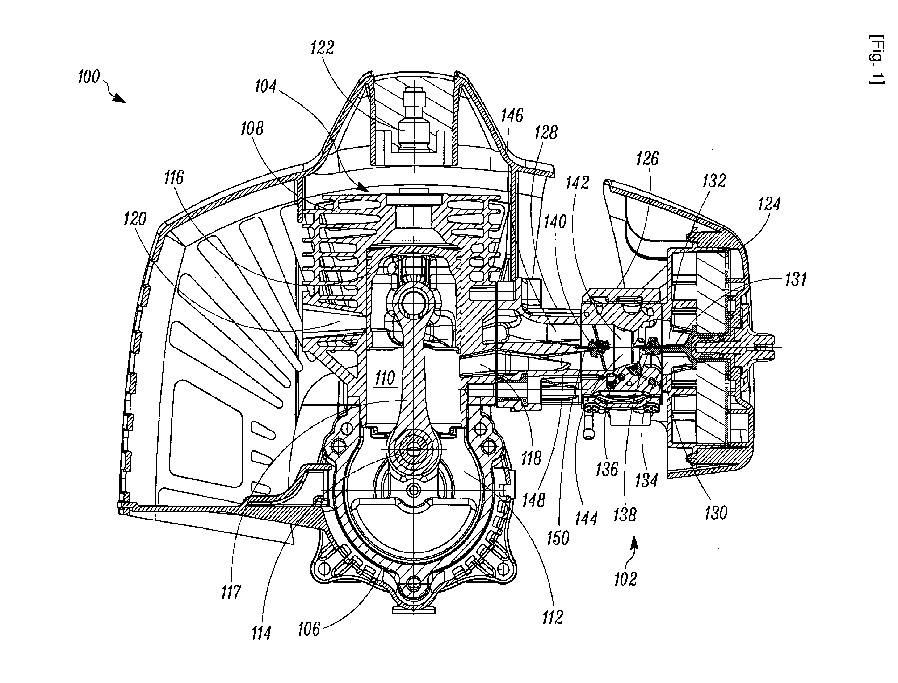

FIG. 1 illustrates a two-stroke combustion engine 100 with an air supply apparatus 102, according to an embodiment of the present invention. The two-stroke stratified scavenging combustion engine 100 (hereinafter referred to as the "engine 100") may be used in various powered systems, for example, but not limited to, chain saws, line trimmers, hedge trimmers, lawn mowers, outboard motors, and automobiles. In addition, any suitable size, shape or type of elements or materials could be used.

As shown in FIG. 1, the engine 100 includes a cylinder block 104 and a crankcase 106. The cylinder block 104 includes a single cylinder 108 (hereinafter referred to as the "cylinder 108") with a cylinder chamber 110. However, the cylinder block 104 may include two or more cylinders (not shown) within the scope of the present invention. The crankcase 106 includes a crankcase chamber 112 which encases a crankshaft 114. A piston 116 reciprocates inside the cylinder chamber 110 and is connected to the crankshaft 114 via a connecting rod 117. Further, the cylinder 108 includes an intake port 118, an exhaust port 120 and one or more scavenging ports (not shown). Alternatively, the intake port 118 may be a part of the crankcase 106. The scavenging ports may be located at different positions on the cylinder without departing from the essence of the present invention. Further, the intake port 118 and/or the scavenging ports may include reed valves (not shown) to regulate fluid flow. The scavenging ports open into scavenging passages (not shown) that connect the crankcase chamber 112 with the cylinder chamber 110. Moreover, a spark plug 122 is also provided for igniting an air-fuel mixture inside the cylinder 108.

The air supply apparatus 102 supplies the engine 100 with air-fuel mixture and scavenging air via the intake port 118 and the scavenging ports respectively. As shown in FIG. 1, the air supply apparatus 102 includes an air cleaner 124, a carburetor 126 and an insulator 128. The air cleaner 124 includes an air outlet 130 which is substantially divided into a first section 132 and a second section 134 by a plate-shaped partition 131. A portion of the partition 131 may also receive the choke valve 138 in a fully open position.

As shown in FIG. 1, the carburetor 126 includes a passage 136, with a choke valve 138 and a throttle valve 140 provided in the passage 136. Alternatively, the carburetor 126 may include only the throttle valve 140. As shown in FIG. 1, the choke valve 138 and the throttle valve 140 substantially divides the passage 136 into an air portion 142 (upper side in the figure) remote from a main jet (not shown) and a mixture portion 144 (lower side in the figure) near the main jet. Further, the air portion 142 and the mixture portion 144 are in communication with the first section 132 and the second section 134 respectively of the air outlet 130. Moreover, as illustrated in FIG. 1, the choke valve 138 and the throttle valve 140 are butterfly valves. However, it may be apparent to a person who is ordinarily skilled in the art that the choke valve 138 and the throttle valve 140 may be any other suitable valve which that regulates airflow, for example, but not limited to, rotary valve, or the like without departing from the scope of the present invention. One or more fuel inlets (not shown) may be provided to supply fuel to air flowing inside the mixture portion 144. The air portion 142 and the mixture portion 144 are connected to a first passage 146 and a second passage 148 respectively of the insulator 128. The insulator 128 also includes an extension portion 150 to receive the throttle valve 140 in a fully open position. The extension portion 150 may also substantially prevent a mixing of air-fuel mixture and air. Further, the first passage 146 and the second passage 148 are connected to the scavenging ports and the intake port 118 respectively of the engine 100. The insulator 128 may be made of an insulating material in order to insulate the heat from the engine 100 during operation.

An operation of the engine 100 will be described now to better illustrate various aspects of the present invention. An upward stroke and a downward stroke of the piston 116 may in general constitute an operational cycle of the engine 100. An upward stroke of the piston 116, substantially originating from a bottom dead centre, results in a suction of air from the air cleaner 124 to the engine 100. An air-fuel mixture already present in the cylinder chamber 110 may also get compressed during the upward stroke. In a piston-valve type arrangement, the intake port and/or the scavenging ports open in accordance with the movement of the piston 116. In a reed-valve type arrangement, the reed valve in the intake port and/or the scavenging ports also open. Further, air from the air cleaner 124 flows through the first section 132 and the second section 134 into the air portion 142 and the mixture portion 144 respectively.

In the mixture portion 144, air is mixed with fuel to form fresh air-fuel mixture. Air in the scavenging air portion 142 is used as scavenging air and is not mixed with fuel. Actuation of the choke valve 138 and the throttle valve 140 in the passage 136 may be determined by various parameters, for example, but not limited to, a phase in an operational cycle of the engine 100, type of engine operation (e.g. idle, full load) etc. Scavenging air and fresh air-fuel mixture then flow into the first passage 146 and the second passage 148 of the insulator 128 respectively. Subsequently, fresh air-fuel mixture and scavenging air may enter the intake port 118 and the scavenging ports respectively. Fresh air fuel mixture may then fill up the crankcase chamber 112. Further, air-fuel mixture already present in the cylinder chamber 110 is ignited by the spark plug 122 when the piston 116 substantially reaches a top dead centre. Alternatively, the ignition may occur prior to or after the piston 116 reaches the top dead centre. During a subsequent downward stroke of the piston 116 from the top dead centre, burned gases are exhausted out of the cylinder chamber 110 via the exhaust port 120. Scavenging air may help in the exhaust of the burned gases. Fresh air-fuel mixture may then fill up the cylinder chamber 110 via the scavenging passages.

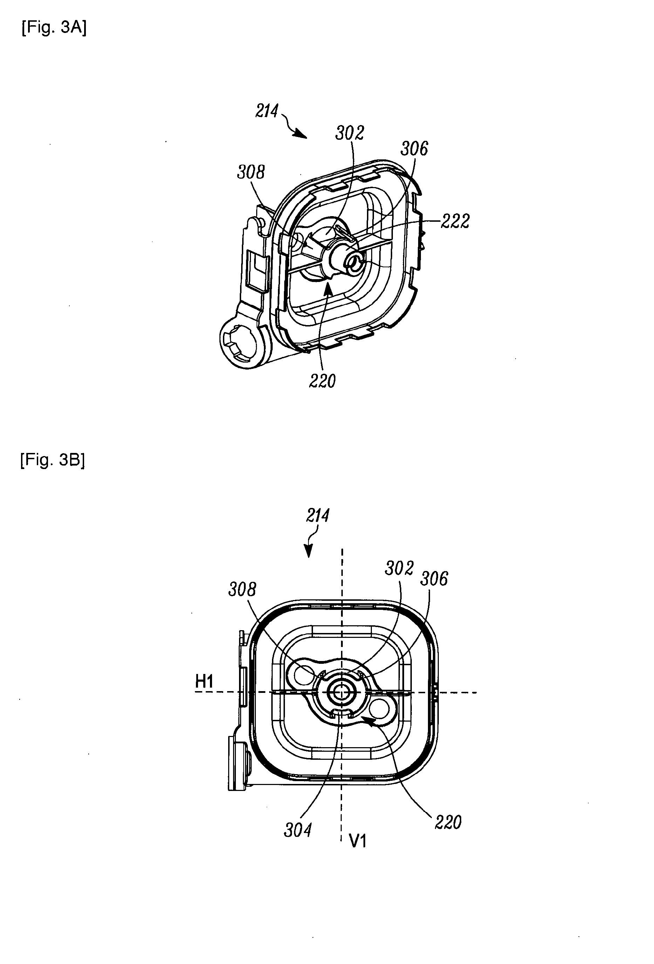

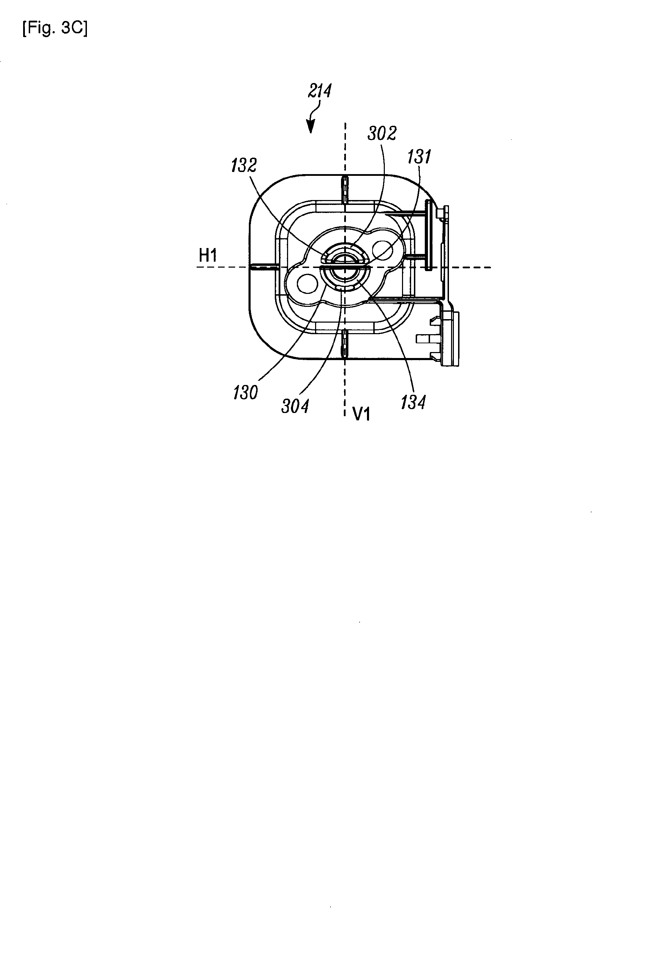

A person ordinarily skilled in the art may realize that dividing the air outlet 130 of the air cleaner 124 into the first section 132 and the second section 134 by the partition 131 enables an ordinary carburetor, similar to the carburetor 126 shown in FIG. 1, to be utilized with a two-stroke stratified scavenging combustion engine. This may eliminate an additional cost of a special carburetor with separate passages for scavenging air and air-fuel mixture and result in a more compact arrangement of the air supply apparatus 102. In this exemplary embodiment, a pressure difference is created between the air portion 142 in communication with the first section 132 of the passage 136 and the mixture portion 144 that is in communication with the second section 134 (will be described below with reference to Figs. 3A-3C), so that the air-fuel mixture generated on the side of the mixture portion 144 is not mixed with the scavenging air flowing through the air portion 142.

More particularly, the mixture portion 144 may be at a greater negative pressure than the air portion 142. This may substantially minimize a flow of air-fuel mixture from the mixture portion 144 to the air portion 142 during operation of the engine 100. Consequently, scavenging air may contain a minimum amount of air-fuel mixture. Thus, during a downward stroke of the piston 116, an amount of unburned air-fuel mixture present in burned gases may be substantially reduced, leading to improved emission standards of the engine 100.

It may be evident to a person who is ordinarily skilled in the art that the details of the engine 100 and the air supply apparatus 102 described above are for illustrative purposes only, and the engine 100 and the air supply apparatus 102 may be of different configurations without deviating from the essence of the present invention. For example, the insulator 128 may include multiple scavenging air flow paths.

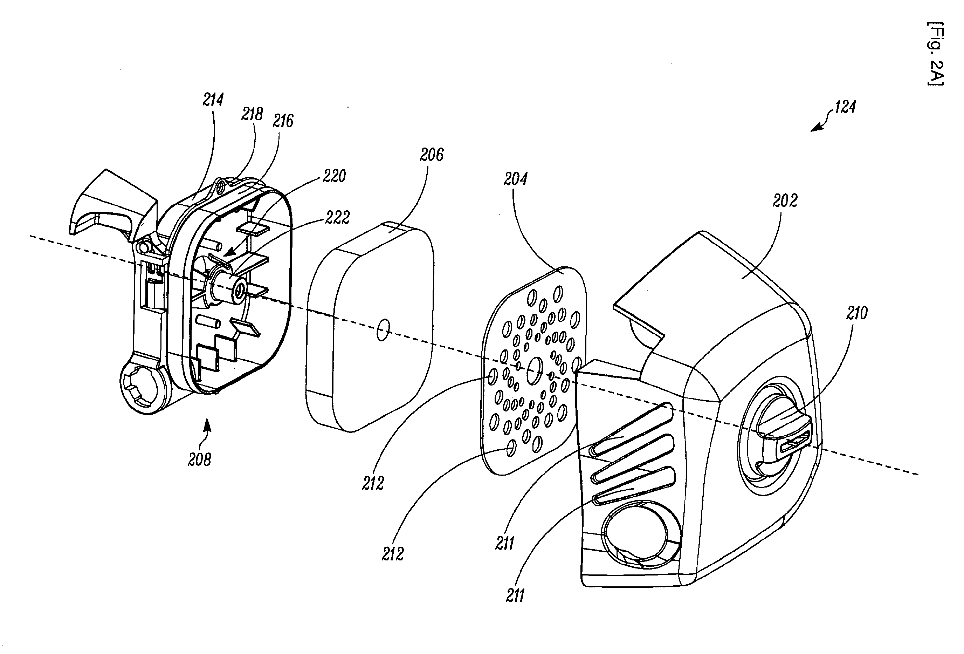

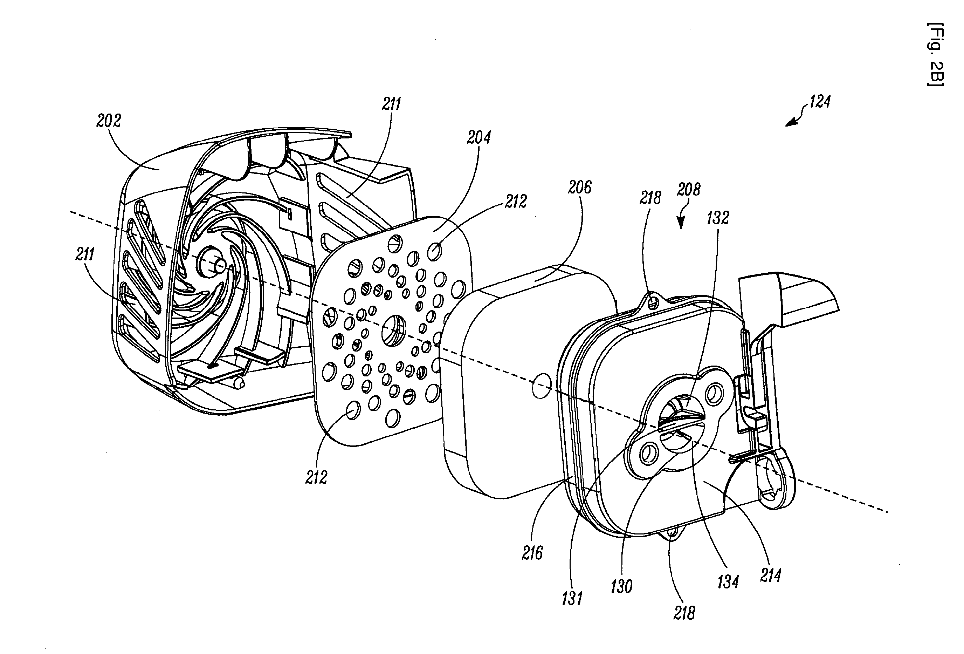

FIGS. 2A and 2B are exploded views of the air cleaner 124, according to an embodiment of the present invention. The air cleaner 124 includes a cover 202, a support plate 204, a filter element 206 and an air cleaner body 208. The cover 202 includes a knob 210 for attaching or detaching the cover 202 to carry out repair or maintenance of the air cleaner 124. Further, the cover 202 includes multiple openings 211 for intake of ambient air. The support plate 204 is provided to retain the filter element 206 in a fixed position and shape. The support plate 204 also includes multiple apertures 212 such that air can pass through the apertures 212 and enter the filter element 206 for purification. The filter element 206 may be a paper filter, a foam filter, or the like.

As shown in FIGS. 2A and 2B, the air cleaner body 208 includes a main body 214 and an attachment member 216. The attachment member 216 includes one or more positioning holes 218 for positioning the cover 202 on the air cleaner main body 208. A substantially cylindrical member 220 corresponding to the air outlet 130 is provided inside the body 214 to cover the air outlet 130. The cylindrical member 220 includes an attachment portion 222 for fixing the filter element 206 and the support plate 204 with the air cleaner body 208. The above-described partition 131 is provided inside the cylindrical member 220 to divide the space within the cylindrical member 220 into the first section 132 on the upper side in the figure and the second section 134 on the lower side.

It may be apparent to a person ordinarily skilled the art that details of the air cleaner 124 described above are for illustrative purposes only, and the air cleaner 124 may be of any other configuration or shape within the scope of the invention. For example, multiple filter elements 206 may be provided. Further, the support plate 204 may not be a separate part and may be integrated with the cover 202 or the air cleaner body 208.

FIGS. 3A-3C illustrate various views of the main body 214 with the attachment member 216 removed, according to this exemplary embodiment. A first aperture 302 and a second aperture 304 that are respectively opened corresponding to the first section 132 and the second section 134 are provided on an outer circumference of the cylindrical member 220. Thus, the first aperture 302 corresponds to the air portion 142 of the passage 136 and the second aperture 304 corresponds to the mixture portion 144. As shown in FIG. 3B, an opening area of the first aperture 302 is different from an opening area of the second aperture 304. More particularly, the opening area of the first aperture 302 is larger than the area of the second aperture 304. Moreover, walls 306 and 308 of the cylindrical member 220 also serve to separate air flowing into the first aperture 302 and the second aperture 304. Since the opening area of the first aperture 302 is large and the opening area of the second aperture 304 is small, the pressure at the second section 134 and the mixture portion 144 on the downstream of the second aperture 304 becomes lower than the pressure at the first section 132 and the air portion 142 on the downstream of the first aperture 302. In addition, the flow velocity of the air-fuel mixture flowing through the mixture portion 144 becomes faster than the flow velocity of the scavenging air flowing through the air portion 142. Accordingly, the air-fuel mixture on the side of the mixture portion 144 becomes liable to flow directly toward the second passage 148, so that the air-fuel mixture is not likely to be mixed with the scavenging air on the side of the air portion 142.

However, the differences in opening areas of the various parts of the main body 214 are for descriptive purposes only, and the opening areas of the different components may be optimized in any other manner within the scope of the present invention to improve the quality of emissions of the engine 100. Further, the opening area of the first aperture 302 may be smaller than the opening area of the second aperture 304. In such an arrangement, the pressure on the side of the air portion 142 is likely to become lower. However, since the flow velocity of the scavenging air on the side of the air portion 142 can be made significantly higher than the flow velocity of the air-fuel mixture on the side of the mixture portion 144 according to the setting of the opening areas, the air-fuel mixture from the mixture portion 144 is rejected at a boundary between the mixture portion 144 and the air portion 142 to prevent the air-fuel mixture from entering the air portion 142, thereby also preventing the mixing of the air-fuel mixture with the scavenging air.

Moreover, the partition 131 may be inclined at an angle with respect to a horizontal axis H1 of the main body 214. Additionally, at least one of the first aperture 302 and the second aperture 304 may be inclined at an angle with respect to a vertical axis V1 of the main body 214.

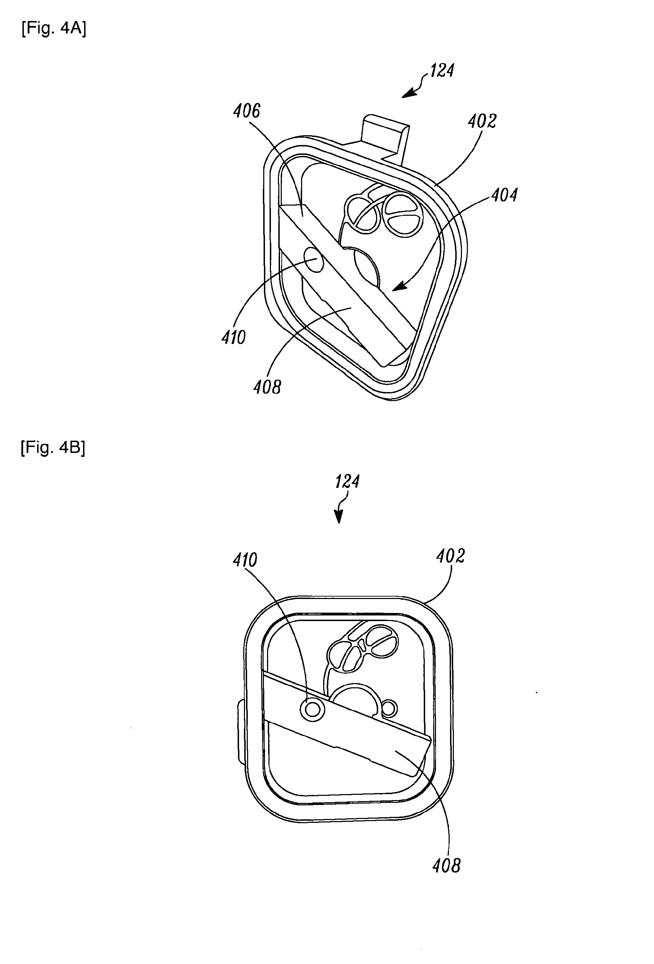

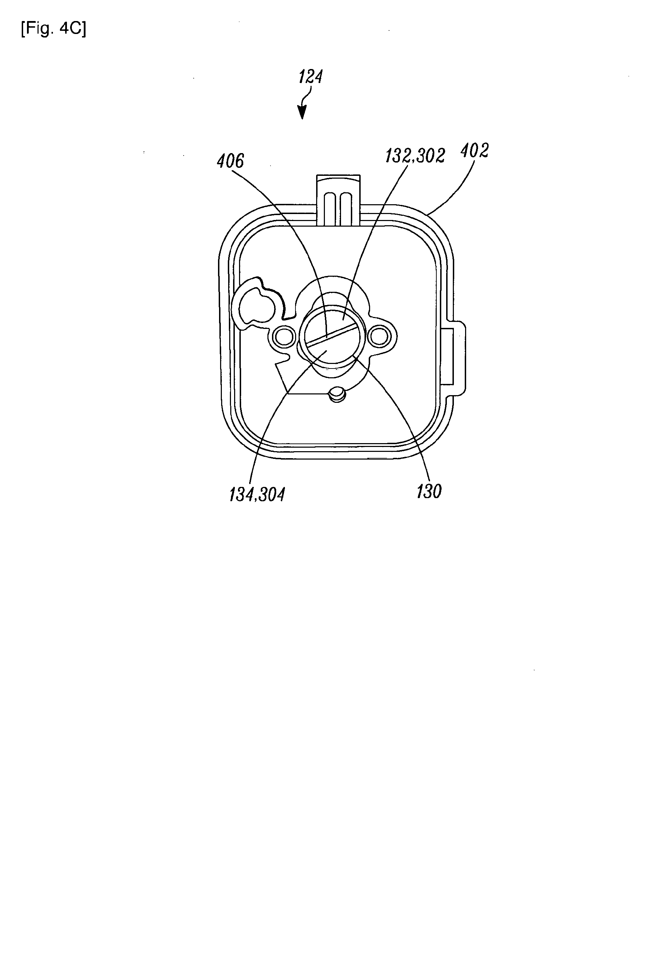

FIGS. 4A-4C illustrate various views of a body 402 of the air cleaner 124, according to another embodiment of the present invention. Various other components of the air cleaner 124 are not shown for illustrative purposes. The body 402 has a plate 404 attached to the main body 402. The plate 404 may be attached to the body 402 by mechanical fasteners, adhesives, or the like. As shown in FIGS. 4A-4C, the plate 404 is substantially L-shaped with a horizontal portion 406 and a vertical portion 408. The vertical portion 408 may also be obliquely inclined (For example, 100 degrees) with respect to the horizontal portion 406 within the scope of the present invention. Further, the vertical portion 408 of the plate 404 includes a hole 410 for inserting a fastening component (For example, a bolt) of the air cleaner 124. The horizontal portion 406 substantially divides the air outlet 130 of the air cleaner 124 into the first section 132 and the second section 134. The horizontal portion 406 may also receive the choke valve 138 in a fully open position. The opening area of the first aperture 302 opened at the first section 132 is different from the opening area of the second aperture 304 opened at the second section 134. More particularly, the opening area of the first aperture 302 is larger than the opening area of the second aperture 304. It may be apparent to a person ordinarily skilled in the art that the plate 404 may have alternative shapes and configurations within the scope of the present invention. For example, the plate 404 may be shaped like a circular arc with no sharp edges.

In the drawings and specification, there have been disclosed preferred embodiments and examples of the invention and, although specific terms are employed, they are used in a generic and descriptive sense only and not for the purpose of limitation, the scope of the invention being set forth in the following claims.

### Industrial Applicability

The present invention is applicable as an air supply apparatus for a two-stroke combustion engine.

### Reference Signs List

- 100: engine
- 102: air supply apparatus
- 104: cylinder block
- 106: crankcase
- 108: cylinder
- 110: cylinder chamber
- 112: crankcase chamber
- 114: crankshaft
- 116: piston
- 117: connecting rod
- 118: intake port
- 120: exhaust port
- 122: spark plug
- 124: air cleaner
- 126: carburetor
- 128: insulator
- 130: air outlet
- 131: partition
- 132: first section
- 134: second section
- 136: passage
- 138: choke valve
- 140: throttle valve
- 142: air portion
- 144: mixture portion
- 146: first passage
- 148: second passage
- 150: extension portion
- 202: cover
- 204: support plate
- 206: filter element
- 208: air cleaner body
- 210: knob
- 211: multiple openings
- 212: multiple apertures
- 214: main body
- 216: attachment member
- 218: positioning holes
- 220: cylindrical member
- 222: attachment portion
- 302: first aperture
- 304: second aperture
- 306,308: wall
- 402: body
- 404: plate
- 406: horizontal portion
- 408: vertical portion
- 410: hole

## Claims

1. An air supply apparatus (102) for a two-stroke stratified scavenging combustion engine (100), the air supply apparatus comprising:
an air cleaner (124) comprising an air outlet (130) and a partition (131), the partition substantially dividing the air outlet into a first aperture (302) and a second aperture (304); and
a carburetor (126) comprising a passage (136) and a throttle valve (140), the throttle valve substantially dividing the passage into an air portion (142) and a mixture portion (144), **characterized in that**
the first aperture (302) is provided at a position corresponding to the air portion (142) and the second aperture (304) is provided at a position corresponding to the mixture portion (144), and
an opening area of the first aperture (302) differs from an opening area of the second aperture (304).

2. An air supply apparatus according to claim 1, **characterized in that** the opening area of the first aperture (302) is larger than that of the second aperture (304).

3. An air supply apparatus according to claim 1, **characterized in that** the opening area of the first aperture (302) is smaller than that of the second aperture (304).

4. An air supply apparatus according to any one of claims 1 to 3, **characterized in that** a cylindrical member (220) that covers the air outlet (130) is provided inside the air cleaner (124),
an inside of the cylindrical member (220) is divided by the partition (131) into a first section (132) and a second section, (134) and
the first aperture (302) and the second aperture (304) are provided on an outer circumference of the cylindrical member (220), the first aperture (302) corresponding to the first section (132) and the second aperture (304) corresponding to the second section (134).

5. An air supply apparatus according to any one of claims 1 to 4, **characterized in that** the partition (131) is plate-shaped.

6. An air supply apparatus according to claim 5, **characterized in that** a choke valve (138) provided by a butterfly valve is provided in the passage, and the partition (131) receives the choke valve in a fully open state.

7. An air supply apparatus according to any one of claims 1 to 4, **characterized in that** the partition (131) is substantially L-shaped with a horizontal portion (406) and a vertical portion (408), and the horizontal portion of the partition divides the air outlet (130) info the first aperture (302) and the second aperture (304).

## Patentansprüche

1. Luftzufuhrvorrichtung (102) für einen geschichteten Scavenging-Zweitaktverbrennungsmotor (100), die Luftzufuhrvorrichtung umfassend:
einen Luftreiniger (124), der einen Luftauslass (130) und eine Trennwand (131) umfasst, wobei die Trennwand den Luftauslass im Wesentlichen in eine erste Öffnung (302) und eine zweite Öffnung (304) aufteilt; und
einen Vergaser (126), der einen Durchgang (136) und ein Drosselventil (140) umfasst, wobei das Drosselventil den Durchgang im Wesentlichen in einen Luftabschnitt (142) und einen Mischungsabschnitt (144) aufteilt, **dadurch gekennzeichnet, dass**
die erste Öffnung (302) an einer Position vorgesehen ist, die dem Luftabschnitt (142) entspricht, und die zweite Öffnung (304) an einer Position vorgesehen ist, die dem Mischungsabschnitt (144) entspricht, und
eine Öffnungsfläche der ersten Öffnung (302) von einer Öffnungsfläche der zweiten Öffnung (304) abweicht.

2. Luftzufuhrvorrichtung nach Anspruch 1, **dadurch gekennzeichnet, dass** die Öffnungsfläche der ersten Öffnung (302) größer als die der zweiten Öffnung (304) ist.

3. Luftzufuhrvorrichtung nach Anspruch 1, **dadurch gekennzeichnet, dass** die Öffnungsfläche der ersten Öffnung (302) kleiner als die der zweiten Öffnung (304) ist.

4. Luftzufuhrvorrichtung nach einem der Ansprüche 1 bis 3, **dadurch gekennzeichnet, dass** ein zylindrisches Glied (220), das den Luftauslass (130) abdeckt, innerhalb des Luftreinigers (124) vorgesehen ist,
eine Innenseite des zylindrischen Glieds (220) durch die Trennwand (131) in einen ersten Teilabschnitt (132) und einen zweiten Teilabschnitt (134) aufgeteilt ist, und
die erste Öffnung (302) und die zweite Öffnung (304) an einem Außenumfang des zylindrischen Glieds (220) vorgesehen sind, wobei die erste Öffnung (302) dem ersten Teilabschnitt (132) entspricht und die zweite Öffnung (304) dem zweiten Teilabschnitt (134) entspricht.

5. Luftzufuhrvorrichtung nach einem der Ansprüche 1 bis 4, **dadurch gekennzeichnet, dass** die Trennwand (131) plattenförmig ist.

6. Luftzufuhrvorrichtung nach Anspruch 5, **dadurch gekennzeichnet, dass** ein Drosselrückschlagventil, das durch ein Drosselklappenventil vorgesehen ist, im Durchgang vorgesehen ist, und die Trennwand (131) das Drosselrückschlagventil in einem vollständig offenen Zustand aufnimmt.

7. Luftzufuhrvorrichtung nach einem der Ansprüche 1 bis 4, **dadurch gekennzeichnet, dass** die Trennwand (131) im Wesentlichen L-förmig mit einem horizontalen Abschnitt (406) und einem vertikalen Abschnitt (408) ist, und der horizontale Abschnitt der Trennwand den Luftauslass (130) in die erste Öffnung (302) und die zweite Öffnung (304) aufteilt.

## Revendications

1. Appareil d'alimentation en air (102) pour un moteur à combustion à deux temps à balayage stratifié (100), l'appareil d'alimentation en air comprenant :
un filtre à air (124) comprenant une sortie d'air (130) et une cloison (131), la cloison divisant essentiellement la sortie d'air en un premier orifice (302) et un deuxième orifice (304) ; et
un carburateur (126) comprenant un passage (136) et un papillon des gaz (140), le papillon des gaz divisant essentiellement le passage en une partie d'air (142) et une partie de mélange (144), **caractérisé en ce que**
le premier orifice (302) est prévu à une position correspondant à la partie d'air (142) et le deuxième orifice (304) est prévu à une position correspondant à la partie de mélange (144), et
une superficie d'ouverture du premier orifice (302) est différente d'une superficie d'ouverture du deuxième orifice (304).

2. Appareil d'alimentation en air selon la revendication 1, **caractérisé en ce que** la superficie d'ouverture du premier orifice (302) est plus grande que celle du deuxième orifice (304).

3. Appareil d'alimentation en air selon la revendication 1, **caractérisé en ce que** la superficie d'ouverture du premier orifice (302) est plus petite que celle du deuxième orifice (304).

4. Appareil d'alimentation en air selon l'une quelconque des revendications 1 à 3, **caractérisé en ce qu'**un élément cylindrique (220) qui couvre la sortie d'air (130) est prévu à l'intérieur du filtre à air (124),
une partie intérieure de l'élément cylindrique (220) est divisée par la cloison (131) en une première section (132) et une deuxième section (134), et
le premier orifice (302) et le deuxième orifice (304) sont prévus sur une circonférence extérieure de l'élément cylindrique (220), le premier orifice (302) correspondant à la première section (132) et le deuxième orifice (304) correspondant à la deuxième section (134).

5. Appareil d'alimentation en air selon l'une quelconque des revendications 1 à 4, **caractérisé en ce que** la cloison (131) est en forme de plaque.

6. Appareil d'alimentation en air selon la revendication 5, **caractérisé en ce qu'**un étrangleur (138) fourni par une vanne-papillon est prévu dans le passage, et la cloison (131) reçoit l'étrangleur dans un état complètement ouvert.

7. Appareil d'alimentation en air selon l'une quelconque des revendications 1 à 4, **caractérisé en ce que** la cloison (131) est essentiellement en forme de L avec une partie horizontale (406) et une partie verticale (408), et la partie horizontale de la cloison divise la sortie d'air (130) en le premier orifice (302) et le deuxième orifice (304) .
